# EUROPEAN PATENT SPECIFICATION

(11) **EP 3 759 788 B1**
(45) Date of publication and mention of the grant of the patent: **26.01.2022**
(21) Application number: 19706620.2
(22) Date of filing: 21.02.2019
(51) Int. Cl.: H02J 9/06, F21S 9/02, F21Y 115/10

(54) **EMERGENCY LED DRIVER WITH COMBINED TEST SWITCH, STATUS INDICATOR AND DURATION SELECT OPERATION**
NOTLEDTREIBER MIT GEMEINSAMEM TESTSCHALTER, STATUSANZEIGE UND DAUERAUSWAHL
DRIVER POUR LED D'URGENCE AVEC COMMUTATEUR DE TEST, INDICATEUR D'ÉTAT ET SÉLECTION DE LA DURÉE

(30) Priority: 28.02.2018 GB 201803578
(43) Date of publication of application: 06.01.2021
(73) Proprietor: Tridonic GmbH & Co. KG, 6851 Dornbirn (AT)
(72) Inventor: MAKWANA, Deepak, Newcastle Upon Tyne NE5 2DJ (GB); SHUKLA, Jagjitpati, County Durham DL16 6DR (GB)
(74) Representative: Beder, Jens
(86) International application number: PCT/EP2019/054381
(87) International publication number: WO 2019/166328

(56) References cited:
- CN-A- 107 396 489
- CN-B- 102 889 538
- ES-U- 1 063 492
- GB-A- 2 519 718
- GB-A- 2 536 301
- US-B1- 6 502 044

## Description

The invention is in the field of emergency converters, in particular of emergency converters for lighting applications which have interfaces to a test switch, a status indicator light and duration selection switches.

In emergency light systems converter devices (converters, ballasts, driver devices) are used for providing a supply voltage to an emergency light for a predetermined time in case mains supply fails. The voltage supply is maintained in case of a mains supply failure for a rated service time using energy stored in an energy storage device such as a rechargeable battery. The rated service time defines a battery discharge duration during which time the emergency converter is required to drive the emergency light with a predetermined drive current.

The functionality of the emergency light system has to be tested at predefined intervals by performing functional tests and has to be continuously monitored during operation using built-in test equipment.

A functional test is initiated for example by operating a test switch arranged at or externally to the emergency converter of the emergency light system. The test switch is often connected to the emergency converter via a two-wire interface and wired to a microcontroller controlling operations of the emergency device.

A current operational state of the emergency converter is signalled using a status indicator light mounted such that it is visible from external to an emergency luminaire housing the emergency converter. Often, a bicolour status indicator light, for example comprising a red light emitting diode (LED) and a green LED is used to indicate plural different operational stati of the emergency converter. Accordingly, at least two connections for driving the status indicator light based on a control signal from the microcontroller of the emergency converter are necessary.

Even if the test switch and the status indicator light would be mounted integrated with the emergency converter, the test switch interface and the status indicator light interface respectively use four terminals of the microcontroller and in case of a modular assembly of the emergency converter, the test switch and the status indicator light use at least four electrical connecting terminals at the emergency converter.

The number of interface terminals of the microcontroller may even increase for bicolour status indicator lights. Moreover, emergency converters, in particular when designed for more advanced product ranges may include a possibility for selecting the exact rated service time in case of a mains supply failure using the energy stored in the rechargeable battery. For example by operating jumper switches or DIP switches, a user may select the rated service time as the minimum time for illuminating an emergency light to be either 1, 2 or 3 hours. Nevertheless, this selection interface requires further parallel signal lines, whose number depends on the number of selectable options.

On the other hand, the number of input/output terminals of a microcontroller is limited or at least increasing the number of microcontroller pins increases the overall costs of the emergency converter.

In short, the interfaces of an emergency converter or at least its microcontroller with a test switch, a status indicator light and a selection interface for rated service time require multiple signal lines and involve considerable space requirements and costs.

GB 2 519 718 A discloses an emergency lighting device comprising all features of the preamble of claim 1 as appended to this specification.

ES 1 063 492 U discloses the use of miniature switches for allowing the user to select several illumination levels in emergency operation, each of them resulting in a different autonomy duration.

CN 102 889 538 B discloses a test switch in parallel with the indicator light.

Each of CN 107 396 489 A and US 6 502 044 B1 discloses a second LED in antiparallel to the first one and activated from a second output. CN 107 396 489 A discloses as well that PWM output signals to operate the LEDs.

GB 2 536 301 A discloses an emergency ballast developed to reduce the number of input terminals needed at the control unit by combining the reception of the test switch and an address -to be used in a different operation mode- at a single pin.

Thus, the invention addresses the problem of reducing complexity of an emergency converter and reduces costs.

The emergency converter according to claim 1 provides an advantageous solution to the problem.

The dependent claims define further advantageous embodiments of the invention.

An emergency converter according to a first aspect comprises a test switch, a status indicator light with at least a first LED, a battery duration select switch and a control circuit. The emergency converter further comprises circuitry configured to enable the control circuit to detect if the test switch is actuated or the battery duration select switch is actuated using a single input terminal of the control circuit. In this first aspect, said circuitry is a very specific one, described further below.

The inventive arrangement reduces the numbers of terminals necessary for connecting a test switch and a duration selection interface to three terminals instead of the at least four terminals of prior art required for the same functionality.

By using the available terminals of the control circuit in the claimed manner it is possible to cover a wide product portfolio with one basic design as the limited number of terminals and input/outputs of the control circuit, for example a microcontroller or application specific circuit (ASIC), are most effectively used for multiple input/output interfaces such as a test switch interface, a duration selection interface, a status indicator light interface, but also added features and interfaces such as DALI communication interface or precise timing using an external watch crystal interface at the emergency converter.

The emergency converter according to said first aspect has the duration select switch comprising at least two switches. Said circuitry comprises a divider network configured to provide a voltage with a value depending on switch states of the at least two switches to the input terminal of the control circuit.

The circuitry within the emergency converter according to said first aspect is connected to the test switch, the status indicator light, the battery duration select switch and the control circuit, and uses an analogue-to-digital-converter input of the control circuit as the input terminal.

In the circuitry within the emergency converter according to said first aspect a switching element is arranged in parallel to the divider network. The switching element is configured to pull the voltage at the input terminal of the control circuit to ground potential when the test switch is actuated.

The circuitry within the emergency converter according to said first aspect includes a further switching element of the circuitry for connecting a control terminal of the first switching element to ground potential when the test switch is not actuated.

A control terminal of the further switching element may be a basis terminal of a transistor, for example a bipolar transistor.

In the emergency converter according to said first aspect the test switch is configured to short circuit terminals of at least the first LED, and the further switching element of the circuitry within the emergency converter according to said first aspect is configured to switch the first switching element into a conducting state when the test switch is actuated.

The emergency converter according to an embodiment is configured such that the circuitry drives the status indicator light from at least one output terminal of the control circuit.

The emergency converter according to an advantageous embodiment arranges the status indicator light and the test switch in parallel circuit topology as a single electronic assembly. This provides all externally accessible interface elements in a single assembly which can be arranged in suitable place at or remote of the emergency luminaire. Furthermore, the three circuit elements test switch and bicolour status indicator light require only two connections to the emergency converter according to the embodiment.

The emergency converter according to a preferred embodiment comprises a status indicator light which arranges a second LED in an antiparallel circuit topology to the first LED. The circuitry is configured to drive the status indicator light from a second output terminal of the control circuit in addition to the at least one output terminal of the control circuit.

Advantageously the second output terminal is a pulse-width modulated output of the control circuit.

Advantageously the emergency converter includes the first output terminal as a pulse width modulated output of the control circuit.

Pulse width modulated outputs are regularly available in microprocessor circuits and allow for a wide range of different optical signals to be emitted using status indicator lights and thereby enable to convey a plurality of different stati of the emergency converter to its environment. The inventive approach is even capable to provide an interface to connect a bicolour status indicator light and a selection interface for three or more different selectable modes, for example different discharge duration times, using only three terminals of the control circuit. Hitherto a corresponding interface offering the same functionality would have required at least four terminals of the control circuit: two pulse width modulated output signals at two output terminals for the status indicator light, an analogue-to-digital converter input terminal for the selection interface and an analogue-to-digital converter input terminal for the test switch. Thus the spatial requirements as well as the involved cost are reduced by the invention, even without reducing a functionality of the emergency converter.

The teachings of the present disclosure are discussed in detail with reference to the enclosed figures, in which
- Fig. 1: depicts the circuitry in an emergency converter,
- Fig. 2: shows a table with different controlling functions of the emergency converter and their respective encoding in switch positions and voltage values at an input terminal of the control circuit, and
- Fig. 3: provides a general overview of an emergency converter with interfaces to external modules.

In the figures same reference numbers denote same or equivalent structures. The explanation of structures with same reference numbers in different figures is avoided where deemed possible for sake of conciseness.

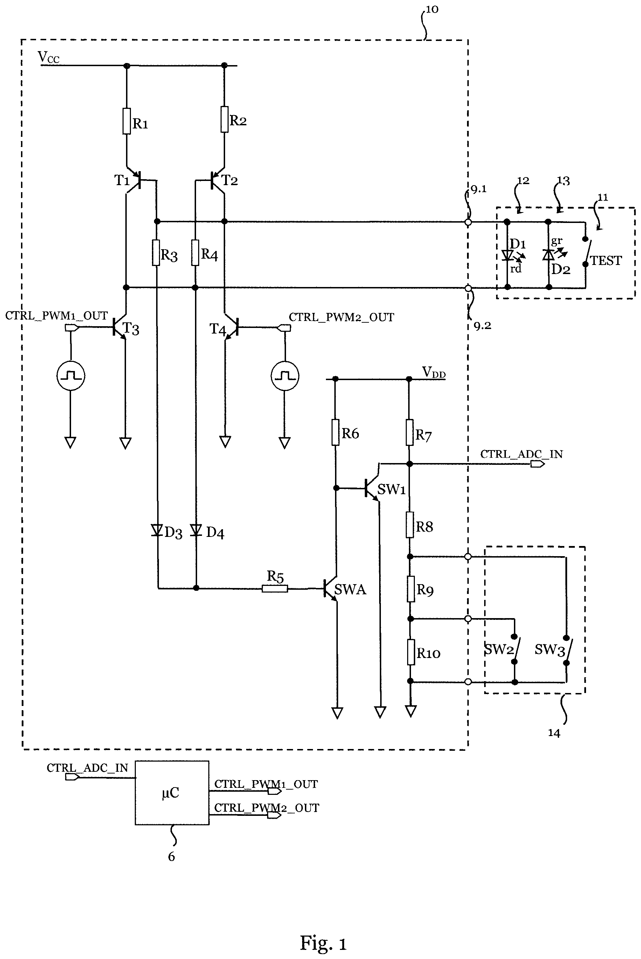

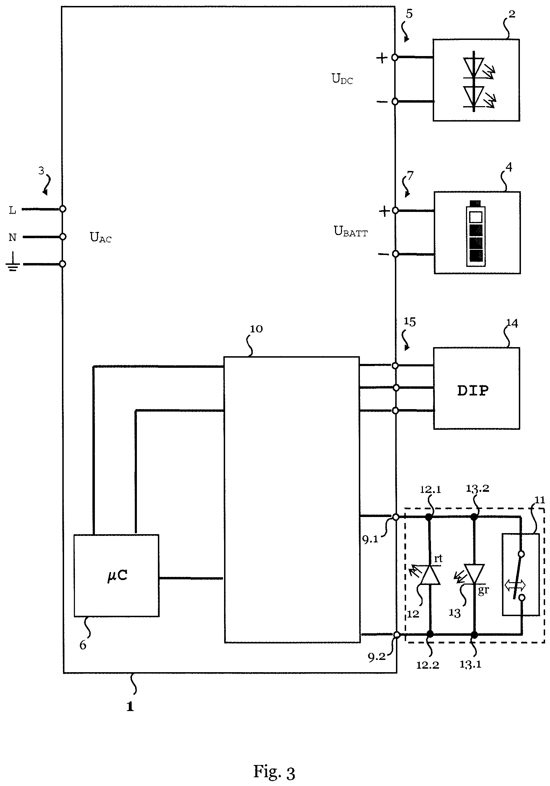

Fig. 1 depicts a circuitry 10 in an emergency converter 1. The circuitry 10 implements the key idea of the present disclosure by providing interfaces at a control circuit 6 for a bicolour status indicator light including two LEDs 12, 13, a test switch 11 and a battery duration select switch in form of the switches SW2, SW3 of an emergency converter 1 explained in its entirety in fig. 3.

The control circuit 6 is advantageously a microcontroller circuit, for example a 32 pin STM32F051K8U7TR, or a dedicated application specific integrated circuit (ASIC). The number of pins provided for input signals and output signals at the control circuit 6 is limited. The implementation of additional functionalities or of using the same type of control circuit 6 over a wide product range from a basic emergency converter up to more sophisticated versions including elaborate status indication capabilities and selection of plural parameters such as different battery discharge duration times is therefore limited.

The shown example of the circuit 10 uses two output terminals CTRL_PWM1_OUT, CTRL_PWM2_OUT of the control circuit 6 outputting each a pulse width (PWM-) modulated output signal and a single input terminal CTRL_ADC_IN to provide interfaces to the bicolour status indicator light including two LEDs 12, 13, a test switch 11 and a battery duration select switch in form of the switches SW2, SW3.

Known emergency converters would require four pins of a microcontroller, typically two pins each outputting a PWM signal and two pins each providing an input to an internal analogue-to-digital converter (ADC) to achieve same functionalities of the emergency converter 1.

In Fig. 1, a green LED D1 as the first status indicator LED 12 and a red LED D2 as the second status indicator LED 12 are arranged in an antiparallel circuit topology. The first status indicator LED 12 is driven by a PWM signal output by the control circuit 6 via the first output terminal CTRL_PWM1_OUT. The first status indicator LED 12 is on, when the PWM-signal output at the first output terminal CTRL_PWM1_OUT switches the transistors T2 and T3 on.

The second status indicator LED 13 is driven by a further PWM signal output by the control circuit 6 via the second output terminal CTRL_PWM2_OUT. The second status indicator LED 13 is on, when the PWM-signal output at the second output terminal CTRL_PWM2_OUT switches the transistors T1 and T4 on.

The test switch 11 is connected in parallel to the first status indicator LED 12 and second status indicator LED 13.

When at least one of the first status indicator LED 12 or the second status indicator LED 13 is on, a transistor SWA acting as a switching element (switch) is on. This is achieved by connecting diodes D3 and D4 to the terminals of the first and second status indicator LEDs 12, 13 and connecting the diodes D3, D4 combined via a resistor R5 to a base terminal of the transistor SWA. When transistor SWA is on, a base terminal of the transistor SW1 is connected to ground potential as a collector-emitter path of the transistor SWA is conducting. Thus, transistor SW1 is off, meaning that the collector-emitter path of the transistor SW1 is not conducting.

When the transistor SW1, acting as a switch, is in an off state, the input terminal CTRL_ADC_IN has an analogue electric potential which is determined by the voltage V_{DD} and the states of switches SW2, SW3 of the battery duration select switch via a voltage divider comprising resistors R7, R8, R9 and R10. Accordingly, a user is enabled to determine an analogue voltage value of the voltage between the input terminal CTRL_ADC_IN and ground potential by respectively actuating the switches SW2 and SW3 in Fig. 1.

The control circuit 6 can use an AD-converter usually provided by microprocessor circuits to convert the analogue voltage from input terminal CTRL_ADC_IN to a corresponding digital value. The control circuit 6 controls further processing for controlling the functions of the emergency converter 1 based on the digital value of the voltage applied to input terminal CTRL_ADC_IN.

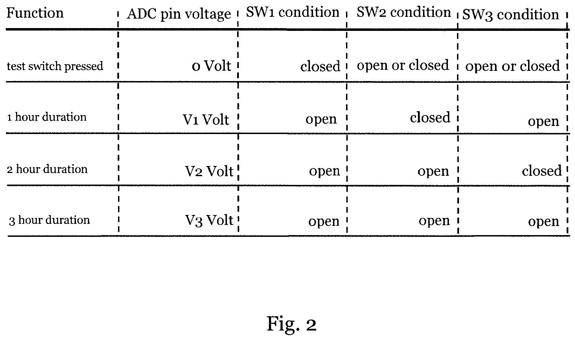

Different values of the voltage applied to input terminal CTRL_ADC_IN encode different battery discharge duration times of the emergency converter 1, as will be discussed with reference to Fig. 2.

If, after start-up of the emergency converter, the test switch 11 is actuated, a short circuit is applied between the terminals of the antiparallel status indicator LEDs 12, 13. As a consequence, the transistor SWA, acting as a switch, is not conducting over the collector-emitter path. This in turn results in the transistor SW1 acting as a switch being turned on and consequently the collector-emitter path of transistor SW1 is conducting. The input terminal CTRL_ADC_IN is then pulled to ground potential and the voltage between input terminal CTRL_ADC_IN and ground potential becomes zero. Accordingly, activating the test switch 11 is detectable on the same input terminal CTRL_ADC_IN of the control circuit 6 as is the status of switches SW2 and SW3.

An information on the actual battery discharge time is available at the input terminal CTRL_ADC_IN continuously as long as the test switch 11 is not activated. Thus, after starting the emergency converter 1, the control circuit 6 is enabled to determine the actual duration selection input via switches SW2, SW3. Even more, a changed duration selection by a different position of switches SW2, SW3 is detectable by the control circuit 6 as long as the test switch 11 is not actuated.

Thus, the circuitry 10 is able to provide the functionalities which up to now require four input/output pins of the control circuit 6 using only three pins of the control circuit 6, thus considerably increasing the design options offered to the design engineer.

Fig. 1 discussing the circuitry 10 uses bipolar transistors as examples for the transistors T1, T2, T3, T4 and switches SWA, SW1. It is evident, that other types of transistors or circuit elements acting a switches, for example field effect transistors, may be used for some or all of the transistors T1, T2, T3, T4, SWA and SW1 as well.

The number of switches SW2, SW3 of the battery duration select switch 14 in Fig. 1 is not limiting. The circuitry would advantageously handle more parallel switches in order to enable more elaborate settings, for example more than three different battery discharge duration times.

The battery duration time selection is only one out of plural possibilities of using the selection function. Generally other selection operations for other parameters or functions of the emergency converter 1 can also be input to the control circuit 6 using a corresponding approach.

Fig. 2 shows a table with different controlling functions of the emergency converter 1 and their respective encoding in switch positions and voltage values at an input terminal CTRL_ADC_IN of the control circuit 6.

The left column of Fig. 3 defines different functions of the emergency converter 1.

The first function defines the state of the test switch 11 as being actuated. In case of the test switch 11 being a push button, the first function is defined as the test switch 11 being pushed and the test switch 11 being in a conducting state or representing a short circuit between its terminals.

Then a voltage value of the voltage at the input terminal CTRL_ADC_IN of the control circuit 6 can be below a predefined threshold value, is around or exactly zero volts.

The switch SW1 is then closed. The status of the switches SW2 and SW3 may be either open or closed without any specific significance to the control circuit 6.

For the second to fourth functions shown in Fig. 2 the test switch is open. Thus, the switch SW1 is open and ensures that the input terminal CTRL_ADC_IN of the control circuit 6 shows a voltage with respect to ground potential which is adjusted by the voltage divider comprising the resistors R7, R8, R9 and R10, the supply voltage V_{DD} and the respective settings of switches SW1 and SW2.

The second function in Fig. 2 defines a battery discharge duration time of 1 h.

For the second function, the switch SW2 is closed and the switch SW3 is open. The input terminal CTRL_ADC_IN of the control circuit 6 is on a voltage potential V1 with respect to ground potential.

The third function in Fig. 2 defines a battery discharge duration time of 2 h.

For the third function, the switch SW2 is closed and the switch SW3 is closed. The input terminal CTRL_ADC_IN of the control circuit 6 is on a voltage potential V2 with respect to ground potential.

The fourth function in Fig. 2 defines a battery discharge duration time of 3h.

For the fourth function, the switch SW2 is open and the switch SW3 is open. The input terminal CTRL_ADC_IN of the control circuit 6 is on a voltage potential V3 with respect to ground potential.

The first to fourth functions defined in Fig. 2 are mere examples of information conveyed by the respective setting of switches SW1, SW2 and test switch 11 in order to show the basic principle. The general circuit topology of circuitry 10 may be respectively scaled down or up to regard one switch SW1 on one hand or more than two switches SW1, SW2 on the other hand in addition to the test switch 11.

Fig. 3 provides a general overview of an emergency converter 1 with interfaces to external modules. The emergency converter 1 shows only those elements and interfaces which support an understanding of the present disclosure.

Via a power supply interface 3 a mains supply, for example an alternating voltage V_{AC} of 230 V/50Hz from a mains infrastructure of a building is provided to the emergency converter 1.

The emergency converter 1 is adapted to provide a load voltage U_{DC} to one or more lighting modules 2 via a lighting interface 5. There may be further lighting interfaces 5 for connecting plural lighting modules 2 in parallel.

The lighting module 2 typically arranges light emitting devices such as LEDs or gas discharge lamps, which are driven by the load voltage or load current I_{LED} via the lighting interface 5. The lighting module 2 may include one or more light emitting devices for emergency operation mode. In the emergency operation mode either one, plural or all light emitting devices of the lighting module 2 may be operated to emit light.

While the previously described elements are typical for general converters or ballasts for lighting applications, the emergency converter 1 also comprises a battery interface 7 for connecting a rechargeable battery 4 as energy storage device storing electric energy. The rechargeable battery 4 is charged with a charge current I_{CHARGE} via the battery interface 7 during a standard operational mode of the emergency converter 1. The emergency converter 1 operates in the standard operation mode from electric energy drawn from mains supply via the mains supply interface 3.

In the emergency operation mode, for example in case of a mains supply failure, the emergency converter 1 provides the lighting module 2 with electric energy from the rechargeable battery 4. In particular the emergency converter 1 provides during the emergency operation mode the load current I_{LED} with a predefined current value for a predefined minimum time, the battery discharge duration time or rated service time, to the lighting module 2.

The battery discharge duration time may for example be selectable and be either 1 h, 2h or 3h as explained above.

A selection interface 15 of the emergency converter 1 enables a user to preselect the battery discharge duration time. The selection interface 15 may comprise two or more parallel signal lines for connecting one or more select switches (battery duration select switches) 14.

The select switch 14 can be a dual inline package switch (DIP-switch) comprising plural switches SW2, SW3 or a conventional jumper arrangement. The select switch 14can be an external module connectable via the selection interface 15 to the emergency converter 1 or may be arranged integrally with the emergency converter 1. For example the select switch 14 may be arranged on a main circuit board of the emergency converter 1 and be accessible via an opening through an enclosure of the emergency converter 1.

The select switch 14 comprises signal lines connected to the control circuit 6 of the emergency converter 1. The control circuit 6 may contain one or more microcontroller circuits or ASICs. The control circuit 6 controls the emergency converter 1. The control circuit 6 can execute and control functions for the change of operational modes such as standard mode of operation, emergency operation mode, charging operation mode for charging the battery 4, monitoring of a load at the lighting interface 5, but also perform test functions for the emergency converter 1 and its various interfaces and control a charging circuit, not shown.

On or more different test functions can be initiated by operating the externally arranged test switch 11. Additionally or alternatively, service intervals may be selected by operating the test switch 11.

The test switch 11 can be implemented in different forms, for example as rocker switch, a toggle switch or preferably as a push button.

The test switch 11 is arranged with a status indicator light, depicted as a first status indicator LED 12 and a second status indicator LED 13. The first status indicator LED 12 is shown as a red LED in parallel circuit topology to the test switch 11, while the first status indicator LED 12 and the second status indicator LED 13 are in antiparallel circuit topology. The first status indicator LED 12, the second status indicator LED 13 and the test switch 11 connect via an interface of the emergency converter 1 with a first connection 9.1 and a second connection 9.3 to the emergency converter 1.

The second status indicator LED 13 is shown as green LED in Fig. 3. The first status indicator LED 12 and the second status indicator LED 13 may show any other type of LEDs or even a combination of LEDs.

The first connection 9.1 is connected to a first terminal 12.1 (Cathode) of the first status indicator LED 12 and a second terminal 13.2 (Anode) of the second status indicator LED 13. The second connection 9.2 is connected to a second terminal 12.2 (Anode) of the first status indicator LED 12 and a first terminal 13.1 (Cathode) of the second status indicator LED 13. The first status indicator LED 12 and the second status indicator ELD 13 are therefore switched in a an antiparallel circuit arrangement (circuit topology) to the first connection 9.1 and the second connection 9.2 of a combined status indicator LED and test switch interface of the emergency converter 1.

The test switch 11 is configured to short-circuit the first connection 9.1 and the second connection 9.2 when the test switch 11 is actuated.

Operating the test switch 11 and applying a short circuit to the first connection 9.1 and the second connection 9.2, enable the emergency converter 1 to detect the applied short circuit. For example, the emergency converter 1 may determine that a value of an electric voltage between the first connection 9.1 and the second connection 9.2 is collapsing, in particular may fall below a predefined threshold value.

The first connection 9.1, the second connection 9.2 and the select switch interface 15 are wired via a circuitry 10 as shown and explained in detail in fig. 1 to the control circuit 6. In particular the first connection 9.1, the second connection 9.2 and the select switch interface 15 are connected via the circuitry 10 to a first input CTRL_ADC_IN, a first output CTRL_PWM1_OUT and a second output CTRL_PWM2_OUT of the control circuit 6.

The antiparallel arrangement of the first status indicator LED 12 and the second status indicator LED 13 with respect to the first connection 9.1 and the second connection 9.2 provides that depending on a polarity of a voltage between the first connection 9.1 and the second connection 9.2 one of the first status indicator LED 12 and the second status indicator LED 13 is switched in reverse direction and accordingly only the respective other of the first status indicator LED 12 and the second status indicator LED 13 emits light. The first status indicator LED 12 and the second status indicator LED 13 are accordingly controllable in an independent manner via the circuitry 10 by the control circuit 10.

The first status indicator LED 12 and the second status indicator LED 13 are controlled to emit light in a targeted manner. Thus, an operational state of the emergency converter 1 may be visually signalled using the status indicator LED 12 and the status indicator LED 13. Preferably the first status indicator LED 12 and the second status indicator LED 13 emit light of a different colour.

The control circuit 6 may control the first status indicator LED 12 and the second status indicator LED 13 in different light emitting modes such as "light on", "light off", "slow flashing", "rapid flashing" for signalling the different operation modes, operational states or results of test procedures of the emergency converter 1.

Some of the different operation modes, operational states or results of test procedures may signal information such as "system ok", " functional test is ongoing", "battery backed endurance test is running", "load failure", "battery failure", "battery charging failure", or "in emergency operation mode".

Preferably the first status indicator LED 12, the second status indicator LED 13 and the test switch 11 are integrated into on a single structural module as indicated in Fig. 3 with the single dashed line. Thus, control elements such as switches of the emergency converter 1 as well as the indicator elements are easy to operate and the status indicator lights are equally easy to read for a user as the single structural module comprising the first status indicator LED 12, the second status indicator LED 13 and the test switch 11 may be arranged at a suitable position of an emergency luminaire including the emergency converter 1. A design engineer also profits from additional degrees of freedom when integrating the emergency converter 1 into the emergency luminaire.

## Claims

1. An emergency converter comprising
a test switch (11),
a status indicator light with at least a first LED (12), wherein the test switch (11) is configured to short circuit terminals of at least the first LED (12),
a battery duration select switch (14),
wherein the battery duration select switch comprises at least two switches (SW2, SW3),
a control circuit (6), and
**characterized in**
**that** the emergency converter comprises circuitry (10) connected to the test switch (11), the status indicator light, the battery duration select switch (14) and the control circuit (6), and the circuitry (10) is configured to enable the control circuit (6) to detect if the test switch (11) is actuated or the battery select switch is actuated using a single input terminal of the control circuit (6), wherein the input terminal is an analogue-to-digital-converter input of the control circuit (6),
**that** the circuitry (10) comprises a divider network configured to provide a voltage with a value depending on switch states of the at least two switches (SW2, SW3) to the input terminal of the control circuit (6),
**that** the circuitry (10) comprises a switching element (SWi) arranged in parallel to the divider network, wherein the switching element (SWi) is configured to pull the voltage at the input terminal of the control circuit (6) to ground potential when the test switch (11) is actuated, and
**that** a further switching element (SWA) of the circuitry (10) is configured to connect a control terminal of the first switching element (SW1) to ground potential when the test switch (11) is not actuated, to switch the first switching element (SW1) into a conducting state when the test switch (11) is actuated.

2. The emergency converter according to claim 1, wherein
the circuitry (10) is configured to drive the status indicator light from at least one output terminal of the control circuit (6).

3. The emergency converter according to claim 2, wherein the status indicator light comprises a second LED (13) in an antiparallel circuit topology to the first LED (12), the circuitry (10) is configured to drive the status indicator light from a further output terminal in addition to the at least one output terminal of the control circuit (6).

4. The emergency converter according to claim 3, wherein the further output terminal is a pulse-width modulated output of the control circuit (6).

5. The emergency converter according to at least one of claims 2-4, wherein the at least one output terminal is a pulse width modulated output of the control circuit (6).

6. The emergency converter according to at least one of claims 1-5, wherein the status indicator light and the test switch (11) are arranged in parallel circuit topology in a common electronic assembly.

## Patentansprüche

1. Notfallwandler, umfassend:
einen Testschalter (11),
eine Statusanzeigeleuchte mit mindestens einer ersten LED (12), wobei der Testschalter (11) dazu konfiguriert ist, Anschlüsse von mindestens der ersten LED (12) kurzzuschließen,
einen Batteriedauerauswahlschalter (14), wobei der Batteriedauerauswahlschalter mindestens zwei Schalter (SW2, SW3) umfasst,
eine Steuerschaltung (6), und
**dadurch gekennzeichnet, dass** der Notfallwandler eine Schaltungsanordnung (10) umfasst, die mit dem Testschalter (11), der Statusanzeigeleuchte, dem Batteriedauerauswahlschalter (14) und der Steuerschaltung (6) verbunden ist, und die Schaltungsanordnung (10) dazu konfiguriert ist, es der Steuerschaltung (6) zu ermöglichen, unter Verwendung eines einzelnen Eingangsanschlusses der Steuerschaltung (6) zu erkennen, ob der Testschalter (11) betätigt wird oder der Batterieauswahlschalter betätigt wird, wobei der Eingangsanschluss ein Analog-Digital-Wandlereingang der Steuerschaltung (6) ist,
dass die Schaltungsanordnung (10) ein Teilernetzwerk umfasst, das dazu konfiguriert ist, eine Spannung mit einem von Schaltzuständen der mindestens zwei Schalter (SW2, SW3) abhängigen Wert für den Eingangsanschluss der Steuerschaltung (6) bereitzustellen,
dass die Schaltungsanordnung (10) ein Schaltelement (SW1) umfasst, das parallel zum Teilernetzwerk angeordnet ist, wobei das Schaltelement (SW1) dazu konfiguriert ist, die Spannung an dem Eingangsanschluss der Steuerschaltung (6) auf Massepotenzial zu ziehen, wenn der Testschalter (11) betätigt wird, und
dass ein weiteres Schaltelement (SWA) der Schaltungsanordnung (10) dazu konfiguriert ist, einen Steueranschluss des ersten Schaltelements (SW1) mit Massepotenzial zu verbinden, wenn der Testschalter (11) nicht betätigt wird, um das erste Schaltelement (SW1) in einen leitfähigen Zustand zu schalten, wenn der Testschalter (11) betätigt wird.

2. Notfallwandler nach Anspruch 1, wobei
die Schaltungsanordnung (10) dazu konfiguriert ist, die Statusanzeigeleuchte von mindestens einem Ausgangsanschluss der Steuerschaltung (6) aus anzusteuern.

3. Notfallwandler nach Anspruch 2, wobei die Statusanzeigeleuchte eine zweite LED (13) in einer antiparallelen Schaltungstopologie zur ersten LED (12) umfasst,
die Schaltungsanordnung (10) dazu konfiguriert ist, die Statusanzeigeleuchte von einem weiteren Ausgangsanschluss zusätzlich zu dem mindestens einen Ausgangsanschluss der Steuerschaltung (6) aus anzusteuern.

4. Notfallwandler nach Anspruch 3, wobei der weitere Ausgangsanschluss ein pulsbreitenmodulierter Ausgang der Steuerschaltung (6) ist.

5. Notfallwandler nach mindestens einem der Ansprüche 2-4, wobei der mindestens eine Ausgangsanschluss ein pulsbreitenmodulierter Ausgang der Steuerschaltung (6) ist.

6. Notfallwandler nach mindestens einem der Ansprüche 1 bis 5, wobei die Statusanzeigeleuchte und der Testschalter (11) in einer parallelen Schaltungstopologie in einer gemeinsamen elektronischen Baugruppe angeordnet sind.

## Revendications

1. Convertisseur d'urgence comprenant
un commutateur de test (11),
un voyant lumineux d'état avec au moins une première DEL (12), dans lequel le commutateur de test (11) est configuré pour court-circuiter des bornes d'au moins la première DEL (12),
un commutateur de sélection de durée de batterie (14), dans lequel le commutateur de sélection de durée de batterie comprend au moins deux commutateurs (SW2, SW3),
un circuit de commande (6) et
**caractérisé en ce que** le convertisseur d'urgence comprend un système de circuit (10) connecté au commutateur de test (11), au voyant lumineux d'état, au commutateur de sélection de durée de batterie (14) et au circuit de commande (6) et le système de circuit (10) est configuré pour permettre au circuit de commande (6) de détecter si le commutateur de test (11) est actionné ou si le commutateur de sélection de batterie est actionné en utilisant une unique borne d'entrée du circuit de commande (6), dans lequel la borne d'entrée est une entrée de convertisseur analogique vers numérique du circuit de commande (6),
**en ce que** le système de circuit (10) comprend un réseau diviseur configuré pour fournir une tension avec une valeur en fonction des états de commutateur des au moins deux commutateurs (SW2, SW3) à la borne d'entrée du circuit de commande (6),
**en ce que** le système de circuit (10) comprend un élément de commutation (SW1) agencé en parallèle au réseau diviseur, dans lequel l'élément de commutation (SW1) est configuré pour extraire la tension au niveau de la borne d'entrée du circuit de commande (6) vers le potentiel de masse lorsque le commutateur de test (11) est actionné et
**en ce qu'**un élément de commutation supplémentaire (SWA) du système de circuit (10) est configuré pour connecter une borne de commande du premier élément de commutation (SW1) au potentiel de masse lorsque le commutateur de test (11) n'est pas actionné, pour commuter le premier élément de commutation (SW1) dans un état conducteur lorsque le commutateur de test (11) est actionné.

2. Convertisseur d'urgence selon la revendication 1, dans lequel
le système de circuit (10) est configuré pour piloter le voyant lumineux d'état à partir d'au moins une borne de sortie du circuit de commande (6).

3. Convertisseur d'urgence selon la revendication 2, dans lequel le voyant lumineux d'état comprend une deuxième DEL (13) dans une topologie de circuit antiparallèle à la première DEL (12),
le système de circuit (10) est configuré pour piloter le voyant lumineux d'état à partir d'une borne de sortie supplémentaire en plus de l'au moins une borne de sortie du circuit de commande (6).

4. Convertisseur d'urgence selon la revendication 3, dans lequel la borne de sortie supplémentaire est une sortie modulée en largeur d'impulsions du circuit de commande (6).

5. Convertisseur d'urgence selon au moins l'une des revendications 2 à 4, dans lequel l'au moins une borne de sortie est une sortie modulée en largeur d'impulsions du circuit de commande (6).

6. Convertisseur d'urgence selon au moins l'une des revendications 1 à 5, dans lequel le voyant lumineux d'état et le commutateur de test (11) sont agencés dans une topologie de circuit parallèle dans un ensemble électronique commun.
